# EUROPEAN PATENT APPLICATION

(11) **EP 4 759 483 A1**
(43) Date of publication of application: **17.06.2026**
(21) Application number: 25222597.4
(22) Date of filing: 11.12.2025
(51) Int. Cl.: B25B 21/02, B25B 23/147, B25F 5/00

(54) **POWER TOOL INCLUDING FIELD ORIENTED CONTROL SPEED-TORQUE CURVE MATCHING**

(30) Priority: 13.12.2024 US 202463733516 P; 24.03.2025 US 202563776375 P
(71) Applicant: Milwaukee Electric Tool Corporation, Brookfield, WI 53005-2550 (US)
(72) Inventor: Wood, Jacob G., Brookfield, WI, 53005 (US); Schneider, Jacob P., Brookfield, WI, 53005 (US); Van Treeck, John Michael Q., Brookfield, WI, 53005 (US)
(74) Representative: Grünecker Patent- und Rechtsanwälte PartG mbB

(57) **Abstract**

An impact tool includes a housing, a trigger, and a motor within the housing. The motor includes a rotor and a stator. The rotor is coupled to a motor shaft. An impact mechanism includes a hammer coupled to the motor shaft and an anvil configured to receive impacts from the hammer. The tool includes an output drive device coupled to the anvil and configured to rotate, and an electronic controller including a memory and an electronic processor. The electronic controller is configured to detect a pull of the trigger and control the motor at a first motor power in response to the pull of the trigger, detect an impact of the hammer and anvil of an impact mechanism, determine a proper motor speed and a proper motor torque for satisfactory engagement of the hammer and anvil, and control the motor to operate at the proper motor speed and motor torque.

## Description

### RELATED APPLICATIONS

This application claims the benefit of U.S. Provisional Patent Application No. 63/733,516, filed December 13, 2024, and U.S. Provisional Patent Application No. 63/776,375, filed March 24, 2025, the entire content of each of which is hereby incorporated by reference.

### FIELD

This application relates to impact power tools.

### SUMMARY

Impact tools described herein include a trigger, a brushless direct current motor including a motor shaft, an impact mechanism including a hammer coupled to the motor shaft, and an anvil configured to receive impacts from the hammer, an output drive device including a shaft coupled to the anvil and configured to rotate to perform a task, and a controller connected to the motor. The controller is configured to receive an output signal from the trigger, and control the motor to operate based on the output signal from the trigger and a predetermined speed/torque demand curve corresponding to satisfactory engagement of the hammer and anvil.

Impact tools described herein include a trigger, a brushless direct current motor including a motor shaft, and an impact mechanism including a hammer coupled to the motor shaft, and an anvil configured to receive impacts from the hammer. An output drive device including a shaft is coupled to the anvil and is configured to rotate to perform a task, and a controller is connected to the motor. The controller is configured to receive an output signal from the trigger and to control the motor to operate based on the output signal from the trigger and a predetermined torque/speed demand curve corresponding to satisfactory engagement of the hammer and anvil.

In some aspects, the impact tool further includes a mode selector, wherein the controller is further configured to adjust the predetermined torque/speed demand curve in response to a changing of a mode of the impact tool via the mode selector.

In some aspects, the controller is further configured to determine a type of a battery pack connected to the impact tool, and to adjust the predetermined torque/speed demand curve based on the type of the battery pack.

In some aspects, the controller is further configured to determine an impedance of a battery pack connected to the impact tool, and to adjust the predetermined torque/speed demand curve based on the impedance of the battery pack.

In some aspects, the controller is configured to control the brushless direct current motor using field-oriented control ("FOC").

In some aspects, the impact tool further includes a hammer translation sensor configured to detect a movement of the hammer, and an anvil rotation sensor configured to detect a movement of the anvil.

In some aspects, the controller is further configured to determine a coefficient of restitution experienced by the hammer.

Impact tools described herein include a housing, a trigger, a motor within the housing, the motor including a motor shaft, and an impact mechanism. The impact mechanism includes a hammer coupled to the motor shaft, and an anvil configured to receive impacts from the hammer, the anvil coupled to an output drive device. The output drive device is configured to rotate. An electronic controller includes a memory and an electronic processor. The electronic controller is configured to detect a pull of the trigger, control the motor at a first motor power in response to the pull of the trigger, determine a motor torque for satisfactory engagement of the hammer and anvil, and control the motor to operate at the motor torque for satisfactory engagement of the hammer and anvil.

In some aspects, the impact tool further includes a mode selector, wherein the electronic controller is further configured to adjust the motor torque in response to a changing of a mode of the impact tool via the mode selector.

In some aspects, the electronic controller is further configured to determine a type of a battery pack connected to the impact tool, and to adjust the motor torque based on the type of the battery pack.

In some aspects, the electronic controller is further configured to determine an impedance of a battery pack connected to the impact tool, and to adjust the motor torque based on the impedance of the battery pack.

In some aspects, the electronic controller is configured to control the motor using field-oriented control ("FOC").

In some aspects, the impact tool further includes a hammer translation sensor configured to detect a movement of the hammer, and an anvil rotation sensor configured to detect a movement of the anvil.

Methods of controlling an impact tool, the impact tool including a trigger, a brushless direct current motor including a motor shaft, an impact mechanism including a hammer coupled to the motor shaft and an anvil configured to receive impacts from the hammer, an output drive device including a shaft coupled to the anvil and configured to rotate to perform a task, described herein include receiving an output signal from the trigger, and controlling the brushless direct current motor to operate based on the output signal from the trigger and a predetermined torque/speed demand curve corresponding to satisfactory engagement of the hammer and anvil.

In some aspects, the method further includes adjusting the predetermined torque/speed demand curve in response to a changing of a mode of the impact tool via a mode selector.

In some aspects, the method further includes determining a type of a battery pack connected to the impact tool, and adjusting the predetermined torque/speed demand curve based on the type of the battery pack.

In some aspects, the method further includes determining an impedance of a battery pack connected to the impact tool, and adjusting the predetermined torque/speed demand curve based on the impedance of the battery pack.

In some aspects, controlling the brushless direct current motor includes controlling the brushless direct current motor using field-oriented control ("FOC").

In some aspects, the method further includes detecting a movement of the hammer using a hammer translation sensor, and detecting a movement of the anvil using an anvil rotation sensor.

In some aspects, the method further includes determining a coefficient of restitution experienced by the hammer.

Methods of controlling an impact tool, the impact tool including a trigger, a motor including a motor shaft, an impact mechanism including a hammer coupled to the motor shaft and an anvil configured to receive impacts from the hammer, an output drive device configured to rotate, described herein include detecting a pull of the trigger, controlling the motor at a first motor power in response to the pull of the trigger, determining a motor torque for satisfactory engagement of the hammer and anvil, and controlling the motor to operate at the motor torque for satisfactory engagement of the hammer and anvil.

In some aspects, the method further includes adjusting the motor torque in response to a changing of a mode of the impact tool via a mode selector.

In some aspects, the method further includes determining a type of a battery pack connected to the impact tool, and adjusting the motor torque based on the type of the battery pack.

In some aspects, the method further includes determining an impedance of a battery pack connected to the impact tool, and adjusting the motor torque based on the impedance of the battery pack.

In some aspects, controlling the motor includes controlling the motor using field-oriented control ("FOC").

In some aspects, the method further includes detecting a movement of the hammer using a hammer translation sensor, and detecting a movement of the anvil using an anvil rotation sensor.

In some aspects, the method further includes determining a coefficient of restitution experienced by the hammer.

Methods described herein for generating a torque/speed demand curve for a power tool include controlling, using a controller of a power tool, a motor to operate at a predetermined torque, causing, using an impact mechanism connected to the motor, a hammer of the impact mechanism to impact an anvil of the impact mechanism, determining, via the controller, a satisfactory engagement of the hammer and anvil, and generating, via the controller, a torque/speed demand curve correlating the predetermined speed and predetermined torque to the satisfactory engagement. The motor is a brushless direct current motor. The hammer is coupled to a motor shaft of the motor. The anvil is connected to a shaft of an output drive device, and the output drive device configured to rotate to perform a task.

In some aspects, the method further includes determining satisfactory engagement based on a translation of the hammer while performing an impact.

In some aspects, the method further includes detecting the translation of the hammer using a hammer translation sensor of the power tool.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of various embodiments will become apparent by consideration of the detailed description and accompanying drawings.

### BRIEF DESCRIPTION OF THE DRAWINGS

FIG. 1 illustrates an impact tool in accordance with embodiments described herein.
FIG. 2 is a schematic diagram of a controller of the impact tool of FIG. 1.
FIGS. 3A and 3B illustrate an example impact mechanism 300 configured to be used in an impact tool.
FIGS. 4A and 4B illustrate an axial view of the rotational positions of the anvil and the hammer, respectively, at a first timing.
FIGS. 5A and 5B illustrate an axial view of the rotational positions of the anvil and the hammer, respectively, at a second timing.
FIGS. 6A and 6B illustrate an axial view of the rotational positions of the anvil and the hammer, respectively, at a third timing.
FIGS. 7A and 7B illustrate an axial view of the rotational positions of the anvil and the hammer, respectively, at a fourth timing.
FIGS. 8A, 8B, 8C, and 8D illustrate a profile view of rotational positions of the anvil and the hammer, at a first timing, a second timing, a third timing, and a fourth timing, respectively, during a properly timed engagement of the hammer and anvil.
FIGS. 9A, 9B, 9C, and 9D illustrate profile views of rotational positions of the anvil and the hammer, in a first unsatisfactory engagement, a second unsatisfactory engagement, a third unsatisfactory engagement, and a fourth unsatisfactory engagement, respectively.
FIG. 10 illustrates a graph of a voltage output of a hammer translation sensor and a current output of a motor current sensor as the hammer impacts the anvil.
FIG. 11 illustrates a graph of a torque/speed demand curve indicating a proper motor speed and proper motor torque to produce a satisfactory engagement of the hammer and anvil for a plurality of different coefficients of restitution resulting from the hardness of a workpiece or joint.
FIG. 12 illustrates several torque/speed slopes overlayed on a graph of the torque/speed demand curve of FIG. 11.
FIG. 13 is a flow diagram of a process of building a demand curve using data points indicating proper motor torques and proper motor speeds over a range of joint or workpiece hardnesses and associated coefficients of restitution experienced by the hammer.
FIG. 14 illustrates a schematic for a field oriented control circuit configured to be implemented in an impact tool.
FIG. 15 illustrates a graph including a torque/speed curve defined for an impact tool using the field oriented control circuit.
FIG. 16 is a flow diagram of a process of operating the impact tool torque/speed demand curve based on a joint or workpiece hardness and associated coefficient of restitution experienced by the hammer.
FIG. 17 illustrates a graph of a torque/speed curve of a power tool in a first operational mode overlaid on a torque/speed curve of a power tool in a second mode.

### DETAILED DESCRIPTION

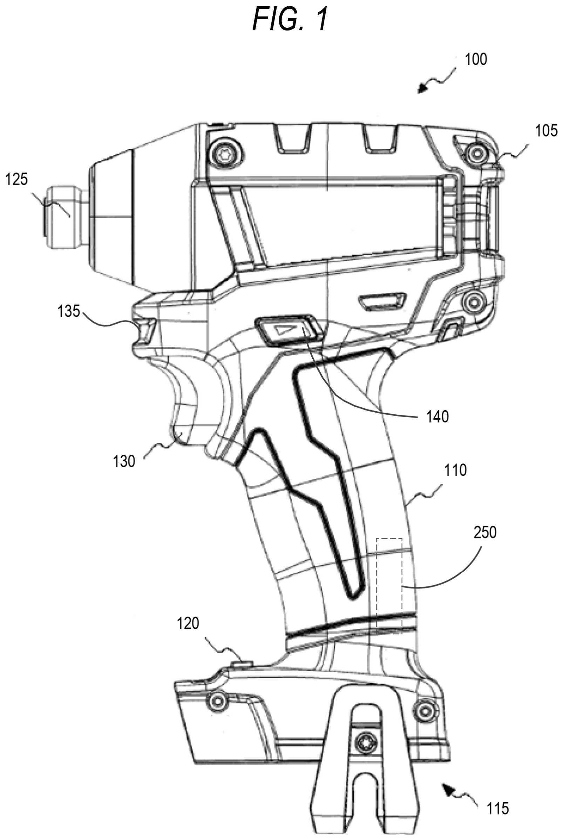

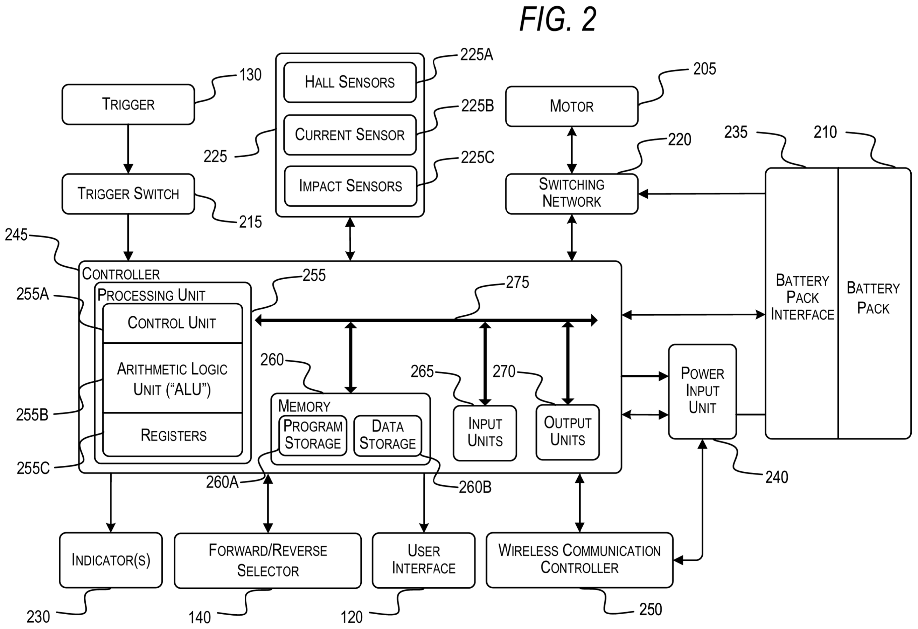

FIG. 1 illustrates a power tool 100, in particular an impact tool (e.g., an impact driver, an impact wrench, a hammer drill, etc.) associated with the task of generating a rotational output (e.g., to drive a bit). The impact tool 100 includes an upper main body 105, a handle 110, a battery pack receiving portion 115, a mode selector 120, an output drive device 125, a trigger 130, a work light 135, and a forward/reverse selector 140. The housing of the impact tool 100 (e.g., the main body 105 and the handle 110) are composed of, for example, a durable and lightweight plastic material or metal. The drive device 125 is composed of, for example, a metal (e.g., steel). In some embodiments, the drive device 125 on the impact tool 100 is a socket configured to receive a bit. The battery pack receiving portion 115 is configured to receive and couple to a battery pack (e.g., battery pack 210 of FIG. 2) that provides power to the impact tool 100. The battery pack receiving portion 115 includes a connecting structure to engage a mechanism that secures the battery pack and a terminal block to electrically connect the battery pack to the impact tool 100. The mode selector 120 allows a user to select a mode of the impact tool 100 and indicates to the user the currently selected mode of the impact tool 100, such as, for example, modes associated with differing torque levels, impact thresholds, torque/speed curves, etc.

As shown in FIG. 2, the impact tool 100 also includes a motor 205 (e.g., a brushless direct current ["DC"]). The motor 205 actuates the drive device 125 and provides the output torque to drive the bit. A primary power source or battery pack 210 couples to the impact tool 100 and provides electrical power to energize the motor 205. The motor 205 is energized based on, for example, the position (e.g., pull) of the trigger 130. When the trigger 130 is depressed, the motor 205 is energized, and when the trigger 130 is released, the motor 205 is de-energized. In the illustrated embodiment, the trigger 130 extends partially down a length of the handle 110. However, in other embodiments, the trigger 130 may be positioned elsewhere on the impact tool 100 or extend a different length down the handle. The trigger 130 is moveably coupled to the handle 110 such that the trigger 130 moves with respect to the tool housing. The trigger 130 moves in a first direction toward the handle 110 when the trigger 130 is depressed by the user. The trigger 130 is biased (e.g., with a spring) such that the trigger 130 moves in a second direction away from the handle 110 when the trigger 130 is released by the user. In some embodiments, when the trigger 130 is depressed by the user, a push rod activates the trigger switch 215, and when the trigger 130 is released by the user, the trigger switch 215 is deactivated. In other embodiments, the trigger 130 is coupled to an electrical trigger switch 215. In such embodiments, the trigger switch 215 may include, for example, a transistor. Additionally, for such electronic embodiments, the trigger 130 may not include a push rod to activate the mechanical switch. Rather, the electrical trigger switch 215 may be activated by, for example, a non-contact position sensor (e.g., a Hall-Effect sensor) that provides information about the relative position of the trigger 130.

The trigger switch 215 outputs a signal indicative of the position of the trigger 130. In some instances, the signal is binary and indicates either that the trigger 130 is depressed or released. In other instances, the signal indicates the position of the trigger 130 with more precision. For example, the trigger switch 215 may output an analog signal that various from 0 to 5 Volts ("V") depending on the extent that the trigger 130 is depressed. For example, 0 V output indicates that the trigger 130 is released, 1 V output indicates that the trigger 130 is 20% depressed, 2 V output indicates that the trigger 130 is 40% depressed, 3 V output indicates that the trigger 130 is 60% depressed 4 V output indicates that the trigger 130 is 80% depressed, and 5 V indicates that the trigger 130 is 100% depressed. Put another way, the amount of pull provided by the user on the trigger 130 can determine the amount of power provided at the motor 205. The signal output by the trigger switch 215 may be analog or digital.

As also shown in FIG. 2, the impact tool 100 includes a user interface (e.g., mode selector 120), the trigger 130, the forward/reverse selector 140, a switching network 220, sensors 225, indicators 230, a battery pack interface 235, a power input unit 240, a controller 245, and a wireless communication controller 250. The battery pack interface 235 is connected to the controller 245 and couples to the battery pack 210. The battery pack interface 235 includes a combination of mechanical (e.g., the battery pack receiving portion 115) and electrical components configured to and operable for interfacing (e.g., mechanically, electrically, and communicatively connecting) the impact tool 100 with the battery pack 210. The battery pack interface 235 is coupled to the power input unit 240. The battery pack interface 235 transmits the power received from the battery pack 210 to the power input unit 240. The power input unit 240 includes active and/or passive components (e.g., voltage step-down controllers, voltage converters, rectifiers, filters, etc.) to regulate or control the power received through the battery pack interface 235 and to the wireless communication controller 250 and controller 245.

The switching network 220 enables the controller 245 to control the operation of the motor 205. Generally, when the trigger 130 is depressed as indicated by an output of the trigger switch 215, electrical current is supplied from the battery pack interface 235 to the motor 205, via the switching network 220. When the trigger 130 is not depressed, electrical current is not supplied from the battery pack interface 235 to the motor 205. In response to the controller 245 receiving the activation signal from the trigger switch 215, the controller 245 activates the switching network 220 to provide power to the motor 205. The switching network 220 controls the amount of current available to the motor 205 and thereby controls the speed, torque, and power output of the motor 205. The switching network 220 may include a plurality of switches, such as, for example, field-effect transistors ("FETs"), bipolar junction transistors, or other types of electrical switches. For instance, the switching network 220 may include a six-FET bridge that receives pulse-width modulated ("PWM") signals from the controller 245 (or another gate driver) to drive the motor 205.

The sensors 225 are coupled to the controller 245 and communicate to the controller 245 various signals indicative of different parameters of the impact tool 100 and/or the motor 205. The sensors 225 include Hall effect sensors 225A, current sensors 225B, impact sensors 225C, one or more voltage sensors, one or more temperature sensors, and one or more torque sensors, one or more temperature sensors, etc. Each Hall effect sensor 225A outputs motor feedback information to the controller 245, such as an indication (e.g., a pulse) when a magnet of the motor's rotor rotates across the face of that Hall effect sensor. Based on the motor feedback information from the Hall effect sensors 225A, the controller 245 can determine the position, velocity, and/or acceleration of the rotor. The electronic processor 255 may detect that the impact tool 100 is in operation based on depression of the trigger 130 or output signals from Hall effect sensors indicating that the motor 205 is rotating. The electronic processor 255 may also detect impact events using the impact sensors 225C. The impact sensors 225C can include a hammer translation sensor ("HTS"), an anvil rotation sensor ("ARS"), a current measurement (e.g., battery current, motor current, or the like), a motor voltage, oscillation patterns of the impact tool 100 as measured by a sensor, etc. In some embodiments, the impact sensors include one or more inductive sensors, one or more Hall effect sensors, etc. In some embodiments, impact events can be detected using sensor threshold parameters, machine learning algorithms, a 1-dimentional Kalman filter, etc.

In response to the motor feedback information and the signals from the trigger switch 215, the controller 245 transmits control signals to control the switching network 220 to drive the motor 205. For instance, by selectively enabling and disabling the FETs of the switching network 220, power received via the battery pack interface 235 is selectively applied to stator coils of the motor 205 to cause rotation of its rotor. The motor feedback information is used by the controller 245 to ensure proper timing of control signals to the switching network 220 and, in some instances, to provide closed-loop feedback to control the speed of the motor 205 to be at a desired level.

The indicators 230 are also coupled to the controller 245 and receive control signals from the controller 245 to tum on and off or otherwise convey information based on different states of the impact tool 100. The indicators 230 include, for example, one or more light-emitting diodes ("LED") or a display screen. The indicators 230 can be configured to display conditions of, or information associated with, the impact tool 100. For example, the indicators 230 are configured to indicate measured electrical characteristics of the impact tool 100, the status of the impact tool 100, the mode of the power tool, etc. The indicators 230 may also include elements to convey information to a user through audible or tactile outputs.

As described above, the controller 245 is electrically and/or communicatively connected to a variety of modules or components of the impact tool 100. In some embodiments, the controller 245 includes a plurality of electrical and electronic components that provide power, operational control, and protection to the components and modules within the controller 245 and/or impact tool 100. For example, the controller 245 includes, among other things, a processing unit 255 (e.g., a microprocessor, a microcontroller, an electronic controller, an electronic processor, or another suitable programmable device), a memory 260, input units 265, and output units 270. The processing unit 255 (herein, electronic processor 255) includes, among other things, a control unit 255A, an arithmetic logic unit ("ALU") 255B, and a plurality of registers 255C (shown as a group of registers in FIG. 2). In some embodiments, the controller 245 is implemented partially or entirely on a semiconductor (e.g., a field-programmable gate array ["FPGA"] semiconductor) chip, such as a chip developed through a register transfer level ("RTL") design process. The electronic processor 255, the memory 260, and the input units 265 and output units 270 are electronically and communicatively connected to each other via one or more busses, such as common bus 275.

The memory 260 is a non-transitory computer readable medium and includes, for example, a program storage area 260A and a data storage area 260B. The program storage area 260A and the data storage area 260B can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, or electronic memory devices. The electronic processor 255 is connected to the memory 260 and executes software instructions that are capable of being stored in a RAM of the memory 260 (e.g., during execution), a ROM of the memory 260 (e.g., on a generally permanent basis), or another non-transitory computer readable medium such as another memory or a disc. Software included in the implementation of the impact tool 100 can be stored in the memory 260 of the controller 245. The software includes, for example, firmware, one or more applications, program data, filters, rules, one or more program modules, and other executable instructions.

The controller 245 is configured to retrieve from memory and execute, among other things, instructions related to the control processes and methods described herein. The controller 245 is also configured to store power tool information on the memory 260 including operational data, information identifying the type of tool, a unique identifier for the particular tool, and other information relevant to operating or maintaining the impact tool 100. The tool usage information, such as current levels (e.g., motor current level), motor voltage, motor speed, motor acceleration, motor direction, and timing and number of impacts may be captured or inferred from data output by the sensors 225. Such power tool information may then be accessed by a user with an external device. In other embodiments, the controller 245 includes additional, fewer, or different components.

The wireless communication controller 250 is coupled to the controller 245 and includes a radio transceiver and antenna, and in some embodiments may include a memory, an electronic processor, and input/output elements similar but independent from those previously described with respect to the controller 245. The radio transceiver and antenna operate together to send and receive wireless messages to and from the external device (e.g., a user device such as a smart phone, tablet, or computer). In some embodiments, the wireless communication controller 250 is configured to receive parameters for operation of the power tool (e.g., a torque/speed demand curve, as will be described below) from the external device, and the controller is configured to control the power tool (e.g., the motor) based on the parameters. In some embodiments, the wireless communication controller 250 is a Bluetooth^{®} controller. In other embodiments, the wireless communication controller 250 communicates using other protocols (e.g., Wi-Fi, cellular protocols, a proprietary protocol, etc.) over a different type of wireless network. For example, the wireless communication controller 250 may be configured to communicate via Wi-Fi through a wide area network such as the Internet or a local area network, or to communicate through a piconet (e.g., using infrared or NFC communications). The communication via the wireless communication controller 250 may be encrypted to protect the data exchanged between the impact tool 100 and an external device/network from third parties.

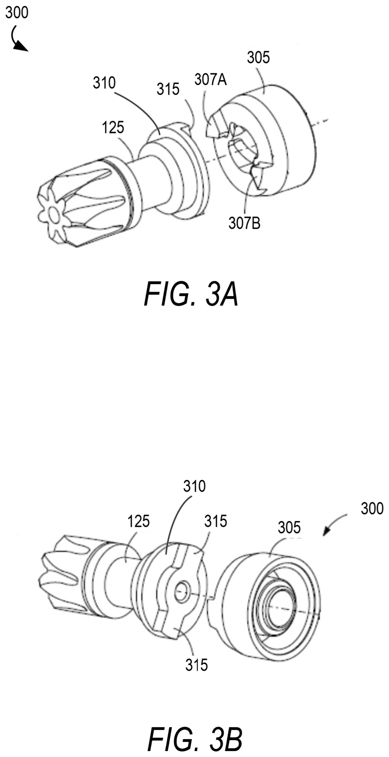

FIGS. 3A and 3B show an example impact mechanism 300 configured to be used in an impact tool (e.g., impact tool 100). Based on the design of the impact mechanism 300 of the impact tool 100, the motor 205 rotates at least a predetermined number of degrees between impacts (e.g., 180 degrees for the impact mechanism 300). The impact mechanism 300 includes a hammer 305 with outwardly extending lugs 307A, 307B and an anvil 310 with outwardly extending lugs 315. The anvil 310 is coupled to the drive device 125. In some embodiments, the drive device 125 includes a gearbox output for interfacing with a gearbox to drive another output shaft to perform a task. In some embodiments, the hammer 305 is directly drive by the motor 205. FIGS. 3A and 3B illustrate a helical bevel gearbox output. However, other types of gearbox outputs may be used, such as a straight bevel, a spiral bevel, or the like. In some embodiments, the gearbox output is omitted and the drive device 125 directly interfaces with a workpiece. For example, the drive device 125 may be a socket as shown in FIG. 2, a chuck, or some other suitable type of workpiece interface. During operation, impacting occurs when the anvil 310 encounters a certain amount of resistance (e.g., when driving a fastener into a workpiece). When this resistance is met, the hammer 305 continues to rotate. A cam groove on a cam guiding the movement of the hammer 305 in the axial direction causes the hammer 305 to disengage the anvil 310 by axially retreating. While axially retreating, the hammer 305 compresses a spring coupled to the back-side of the hammer 305. Once the hammer 305 has axially retreated sufficiently to disengage the anvil 310, the hammer 305 advances rotationally again while the spring drives hammer downward 305 to once again engage (i.e., impact) the anvil 310. In the embodiment shown, when the impact mechanism 300 is operated, the hammer lugs 307A, 307B impact the anvil lugs 315, for example, every 180 degrees. Accordingly, when the impact tool 100 is impacting, the hammer 305 rotates 180 degrees without the anvil 310, impacts the anvil 310, and then rotates with the anvil 310 a certain amount before repeating this process. Although hammer lugs 307A, 307B that impact the anvil lugs 315 every 180 degrees are shown, more than two hammer lugs 307A, 307B may be used, which would change the degrees of separation (e.g., three hammer lugs that impact the anvil lugs 315 every 30 degrees), according to various embodiments.

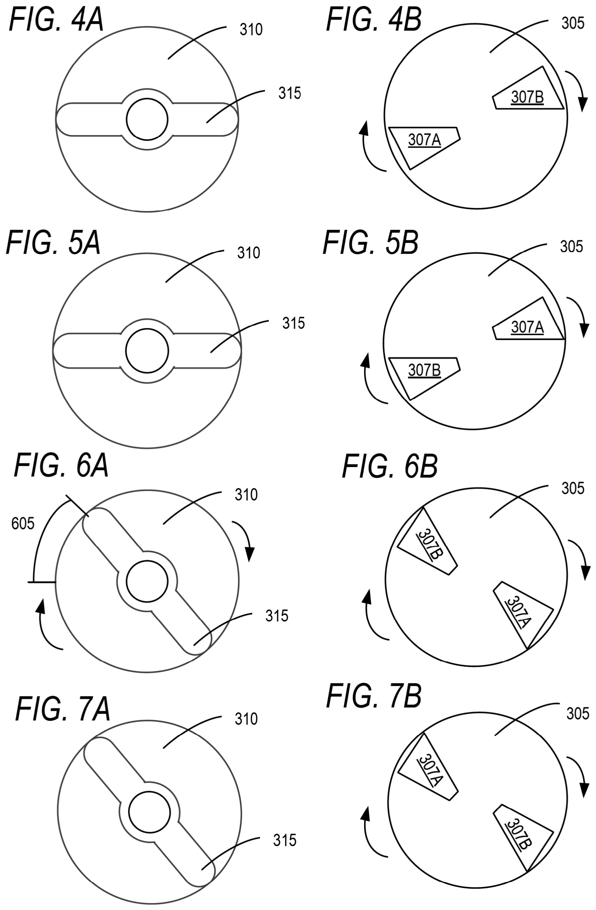

The controller 245 can determine how far the hammer 305 and the anvil 310 rotated together by monitoring the angle of rotation of the shaft of the motor 205 between impacts using one or more of the Hall effect sensors 225A or by monitoring the anvil position using the anvil position sensor. For example, when the impact tool 100 is driving an anchor into a softer joint, the hammer 305 may rotate 225 degrees between impacts. In this example of 225 degrees, 45 degrees of the rotation includes hammer 305 and anvil 310 engaged with each other and 180 degrees includes just the hammer 305 rotating before the hammer lugs 307A, 307B impact the anvil 310 again. FIGS. 4A-7 illustrate an example of rotation of the hammer 305 and the anvil 310 at different stages of operation.

FIGS. 4A and 4B show an axial view of the rotational positions of the anvil 310 and the hammer 305, respectively, at a first timing (e.g., just after the hammer lugs 307A, 307B disengage the lugs 315 of the anvil 310 (i.e., after an impact and engaged rotation by both the hammer 305 and the anvil 310 has occurred)). FIG. 4A shows a first rotational anvil position of the anvil 310 at the first timing. FIG. 4B shows a first rotational hammer position of the hammer 305 at the first timing (e.g., just as the hammer lugs 307A and 307B begin to axially retreat from the anvil 310). After the hammer 305 disengages the anvil 310 by axially retreating, the hammer 305 continues to rotate (as indicated by the arrows in FIG. 4B) while the anvil 310 remains in the first rotational anvil position. FIGS. 5A and 5B show an axial view of the rotational positions of the anvil 310 and the hammer 305, respectively, at a second timing (e.g., at a first moment of impact). As shown in FIG. 5A, the anvil 310 remains in the first rotational anvil position at the second timing. As shown in FIG. 5B, the hammer 305 has rotated 180 degrees to a second rotational hammer position (as indicated by the arrows in FIG. 5B, and the change of positions of hammer lugs 307A and 307B from FIG. 4B to FIG. 5B).

Upon impact between the hammer lugs 307A and 307B and the anvil lugs 315, the hammer 305 and the anvil 310 rotate together in the same rotational direction (as indicated by the arrows in FIGS. 6A and 6B) which generates torque that is provided to the drive device 125 to, for example, drive an anchor into a workpiece (e.g., metal, concrete, etc.). FIGS. 6A and 6B show an axial view of the rotational positions of the anvil 310 and the hammer 305, respectively, at a third timing (e.g., after the hammer 305 again disengages the anvil 310 by axially retreating). As an example, in FIGS. 6A and 6B, at a third timing, the hammer 305 is in a third rotational hammer position and the anvil 310 is in a second rotational anvil position that is approximately 45 degrees from the first rotational anvil position as indicated by drive angle 605. The drive angle 605 indicates the number of degrees that the anvil 310 rotated between events (e.g., between non-movement periods or between impacts), which corresponds to the number of degrees that the drive device 125 rotated between events.

As stated above, after the hammer 305 disengages the anvil 310, the hammer 305 continues to rotate (as indicated by the arrows in FIG. 7B) while the anvil 310 remains in the same rotational position. FIGS. 7A and 7B show an axial view of the rotational positions of the anvil 310 and the hammer 305, respectively, at a fourth timing (e.g., a second moment of impact is occurring). As shown in FIG. 7A, the anvil 310 remains in the second rotational anvil position at the fourth timing. As shown in FIG. 7B, the hammer 305 has rotated 180 degrees from the third rotational hammer position to a fourth rotational hammer position. Relative to FIG. 5B (i.e., the first timing [e.g., when the first moment of impact occurred]), the hammer 305 has rotated 225 degrees (i.e., 45 degrees while engaged with the anvil 310 after the previous impact and 180 degrees after disengaging from the anvil 310). Although specific degrees of rotation are used for exemplary purposes above, it can be appreciated that the specific degrees of rotation may vary.

As described previously, the controller 245 may monitor when impacts occur and may monitor the position of the shaft of the motor 205. Using this information, the controller 245 may determine the drive angle 605 experienced by the drive device 125 (i.e., the number of degrees that the drive device 125 has rotated). For example, in the example shown, the controller 245 may detect when each impact occurs and record the rotational position of the shaft. The controller 245 can then determine the number of degrees that the shaft rotated between impacts. The controller 245 can subtract 180 degrees from the number of degrees that the shaft rotated to calculate the drive angle 605 experienced by the drive device 125.

The calculated drive angle 605 can then be used to indicate a characteristic of the joint that the anchor is being driven into and to control the motor 205. For example, the smaller the drive angle 605, the harder the joint (e.g., the anchor rotates less in harder joints than in softer joints), and vice versa. Thus, a small drive angle (e.g., less than 10 degrees) may indicate that the anchor is seated and no longer needs to be driven into the workpiece. Accordingly, when the drive angle 605 is below a predetermined angle threshold (e.g., 10 degrees) for more than a predetermined number of impacts, the controller 245 may control the motor 205 to run at a slower speed or may turn off the motor 205.

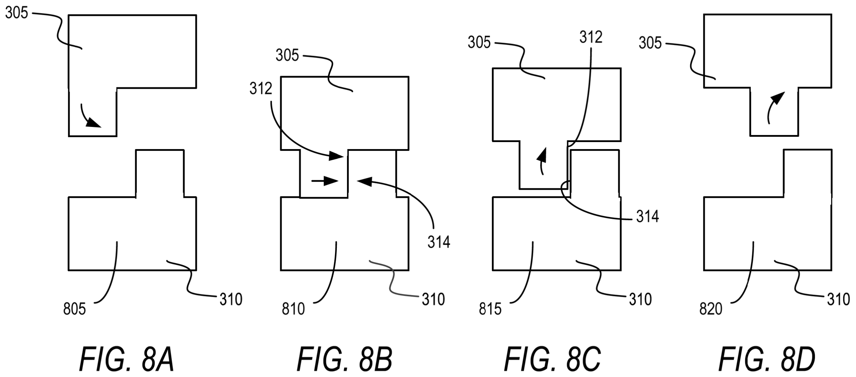

FIGS. 8A, 8B, 8C, and 8D show a profile view of rotational positions of the anvil 310 and the hammer 305, at a first timing 805, a second timing 810, a third timing 815, and a fourth timing 820, respectively, during a properly timed engagement of the hammer 305 and anvil 310. At the first timing 805, the hammer 305 is spinning in a clockwise direction and is retracted upward in an axial direction with respect to the anvil 310. In transitioning between the first timing 805 and the second timing 810, the hammer 305 travels downward in an axial direction toward the anvil 310 while continuing to rotate in the clockwise direction. At the second timing 810, the entirety or substantially the entirety of an impact surface 312 of the hammer 305 (e.g., 75%-100% of the impact surface 312) engages an impact surface 314 of the anvil 310 to impact it in what is referred to herein as "satisfactory engagement." Satisfactory engagement occurs when the hammer 305 extends fully downward in the axial direction with proper timing to impact the anvil 310. As will be described in more detail below, satisfactory engagement may be achieved by the controller 245 by selecting the proper motor torque and/or motor speed for a given joint hardness (and resulting coefficient of restitution experienced by the hammer 305 in response to impacting the anvil 310) and controlling the motor 205 accordingly. In transitioning between the second timing 810 and the third timing 815, the impact surface 314 of the anvil 310 retreats from the impact surface 312 of the hammer 305 due to the force of the hammer 305 impacting the anvil 310. As described above, this movement of the anvil rotates the drive device 125. At the third timing 815, the hammer 305 rebounds from impacting the anvil 310 and is retracted upward in the axial direction away from the anvil 310. At the fourth timing, the hammer 305 is retracted farther upward in the axial direction and begins to rotate again in a clockwise direction in preparation for another impact to the anvil 310.

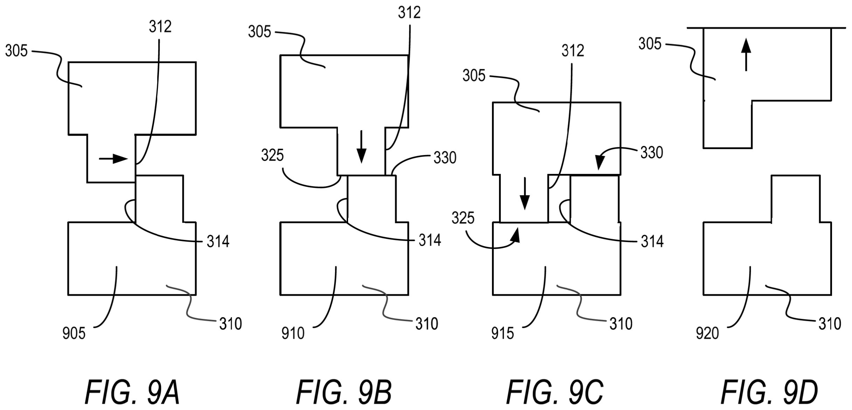

FIGS. 9A, 9B, 9C, and 9D show profile views of rotational positions of the anvil 310 and the hammer 305, in a first unsatisfactory engagement 905, a second unsatisfactory engagement 910, a third unsatisfactory engagement 915, and a fourth unsatisfactory engagement 920, respectively. In the first unsatisfactory engagement 905, and the impact surface 312 of the hammer 305 is misaligned with the impact surface 314 of the anvil 310. In the example shown, only about 25% of the impact surface of the hammer 305 is contacting the anvil during impact. However, an impact where more or less of the impact surface 312 of the hammer 305 (e.g., 1%-74% of the impact surface 312 of the hammer 305) contacts the anvil 310 may also be considered an unsatisfactory engagement. The unsatisfactory engagement 905 shown in FIG. 9A may be caused by too much power being used to drive the rotation of the hammer 305, causing the hammer 305 to rotate too far too quickly while extending downward in the axial direction to impact the anvil 310.

In the second unsatisfactory engagement 910, a top surface 325 of the hammer 305 has extended downward in the axial direction with improper timing to contact a top surface 330 of the anvil 310. The unsatisfactory engagement 910 shown in FIG. 9B may be caused by too much or too little power being used to drive the rotation of the hammer 305, causing the hammer 305 to rotate too far or not far enough before extending downward in the axial direction to impact the anvil 310. In the third unsatisfactory engagement 915, a top surface 325 of the hammer 305 has extended downward in the axial direction with improper timing to drag along the body of the anvil 310 before the impact surface 312 of the hammer 305 eventually impacts the impact surface 314 of the anvil 310. The unsatisfactory engagement 915 shown in FIG. 9C may be caused by too little power being used to drive the rotation of the hammer 305, causing the hammer 305 to extend downward in the axial direction too soon before impacting the anvil 310. In the fourth unsatisfactory engagement 920, the hammer 305 has rebounded upward in the axial direction so far that is crashes against an upper travel limit (e.g., the upper limit of a cam groove of that the hammer travels along in the axial direction). The unsatisfactory engagement 920 shown if FIG. 9D may be caused by too much power being used to drive the rotation of the hammer 305, causing the hammer 305 to rebound to far upward in the axial direction after impacting the anvil 310.

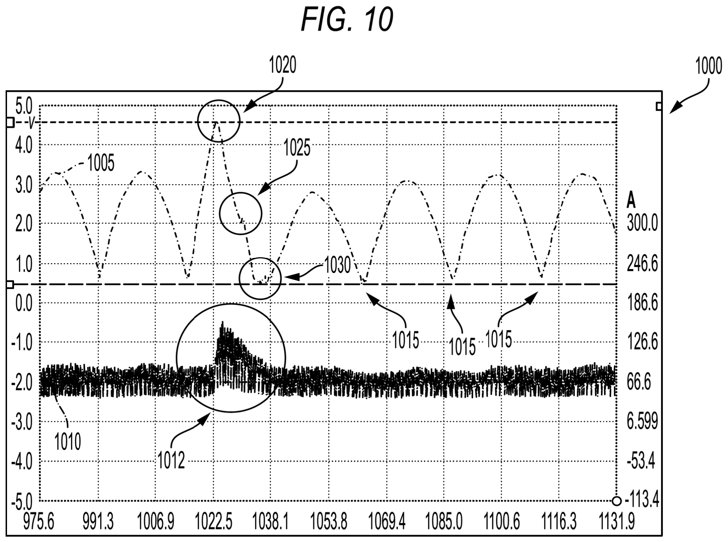

FIG. 10 shows a graph 1000 of a voltage output 1005 of, for example, a hammer translation sensor ("HTS") (e.g., impact sensor 225C) and a current output 1010 of a motor current sensor (e.g., current sensor 225B) as the hammer 305 impacts the anvil 310. The HTS and the motor current sensor may be connected to the power tool externally as part of a test bed or may be included in the impact tool 100 in sensors 225. The voltage output illustrates a number of satisfactory engagements 1015 as pointed valleys at the feet of a number of rounded peaks indicating a desirable rotation/movement of the hammer 305 before impact. The satisfactory engagements 1015 are characterized by a valley including a quick and decisive change in direction of the voltage output 1005 generated by the HTS, indicating a desirable rotation/movement of the hammer 305 during and after impact. Several unsatisfactory engagements are also shown in the voltage output 1005, and have characteristics that can be contrasted to the characteristics of the satisfactory engagements 1015. Unsatisfactory engagement 1020 is shown in the voltage output 1005 as an upward pointed peak cresting at a quick and decisive change in direction downward. The voltage output 1005 from the HTS shown an unsatisfactory engagement 1020 indicates that the hammer 305 is rebounding too far in the axial direction after impacting the anvil 310, over-compressing the spring that drives the hammer 305 in the axial direction with respect to the anvil 310, and crashing against the upper limit of a cam groove that the hammer travels along in the axial direction when dropping to impact the anvil 310, as described with respect to the fourth unsatisfactory engagement 920. The current output 1010 indicates that a current spike 1012 is associated with unsatisfactory engagement 1020. Unsatisfactory engagement 1025 is shown in the voltage output 1005 as a sawtooth interruption in the downward trajectory of the voltage output 1005. The voltage output 1005 from the HTS shown at unsatisfactory engagement 1025 indicates that the top surface 325 of the hammer 305 is impacting the top surface 330 of the anvil 310 while travelling downward in the axial direction, as described with respect to the second unsatisfactory engagement 910, and causing a brief interruption in the axial translation of the hammer 305 perceived by the HTS. Unsatisfactory engagement 1030 is shown in the voltage output 1005 as a sawtoothed feature at the bottom of the downward trajectory of the voltage output 1005. The voltage output 1005 from the HTS shown at unsatisfactory engagement 1025 indicates that the top surface 325 of the hammer 305 is extended fully downward in the axial direction prematurely and drags along the body of the anvil 310 before the impact surface 312 of the hammer 305, as described with respect to the second unsatisfactory engagement 915, causing an extended pause in axial translation of the hammer 305 as perceived by the HTS.

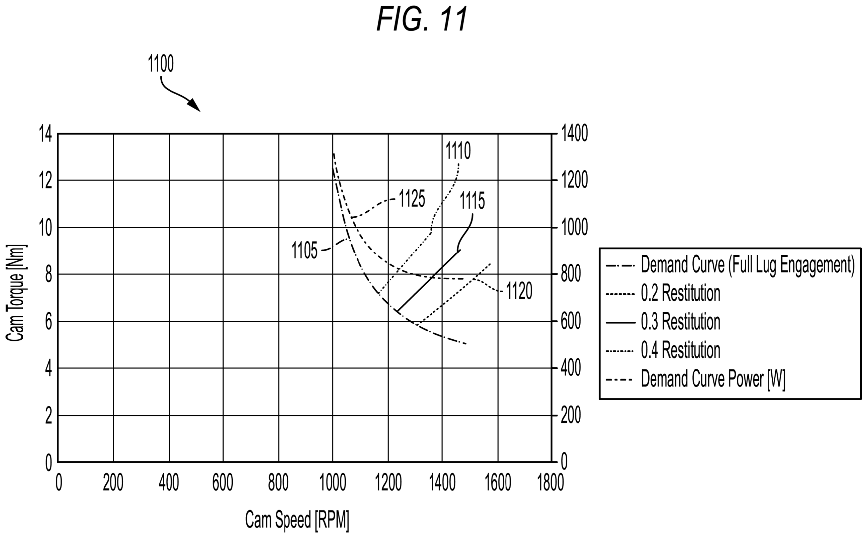

FIG. 11 shows a graph 1100 of a torque/speed demand curve 1105 indicating, for example, a proper motor speed and proper motor torque to produce satisfactory engagements of the hammer 305 and anvil 310 (e.g., as shown in FIG. 8B) for a plurality of different coefficients of restitution 1110, 1115, 1120 associated with a plurality of different hardnesses of various workpieces or joints. Although only three coefficients of restitution are illustrated for exemplary purposes, identifying the propose torques and speeds for the motor 205 to produce the full demand curve 1105 would require many more data points, depending on a desired precision of the demand curve 1105. A number of tested coefficients of restitution, for example, in the hundreds or thousands can ensure that the power tool 100 will always make satisfactory engagement between the hammer 305 and the anvil 310 for a wide range of coefficients of restitution.

A lower coefficient of restitution implies a smaller rebound experienced by the hammer 305, while a higher coefficient of restitution implies a larger rebound experienced by the hammer 305. The restitution of the joint or workpiece, the torque of the motor 205, and the speed of the hammer 305 when impacting the anvil 310 affects the rebound of the hammer 305 after impacting the anvil 310. Accordingly, controlling the speed and torque of the motor 205 impact tool 100 to meet the proper motor speed and proper motor torque along the demand curve 1105 results in satisfactory engagement between the hammer 305 and the anvil 310. For example, as shown in FIG. 11, for a coefficient of restitution of 0.2 (i.e., at coefficient of restitution 1110) a proper motor torque is about 7 Newton-meters ("Nm") and a proper motor speed is about 1150 RPM to produce a satisfactory engagement of the hammer 305 and anvil 310. As additional examples, for a coefficient of restitution of 0.3 (i.e., at coefficient of restitution 1115) a proper motor torque is about 6.5 Nm and a proper motor speed is about 1250 RPM to produce a satisfactory engagement of the hammer 305 and anvil 310, and for a coefficient of restitution of 0.4 (i.e., at coefficient of restitution 1120) a proper motor torque is about 5.9 Nm and a proper motor speed is about 1100 RPM to produce a satisfactory engagement of the hammer 305 and anvil 310.

FIG. 11 also shows a motor power demand curve 1125, which illustrates how the power drawn by the motor 205 changes when the motor 205 is controlled to produce the proper motor torque and proper motor speed shown in the torque/speed demand curve 1105 (e.g., the motor 205 can operate at less than maximum power but significantly greater efficiency based on the satisfactory engagement of the hammer 305 and anvil 310 with every impact). Although the torque/speed demand curve 1105 is primarily described with respect to satisfactory engagement of the hammer 305 and anvil 310, other factors or parameters of the power tool 100 can be used to generate different torque/speed demand curves 1105 that cause the power tool 100 to operate below a maximum power capability of the power tool 100 and motor 205 to achieve a desired characteristic of operation for the power tool 100 (e.g., greater efficiency, greater life or longevity, longer battery pack life, etc.).

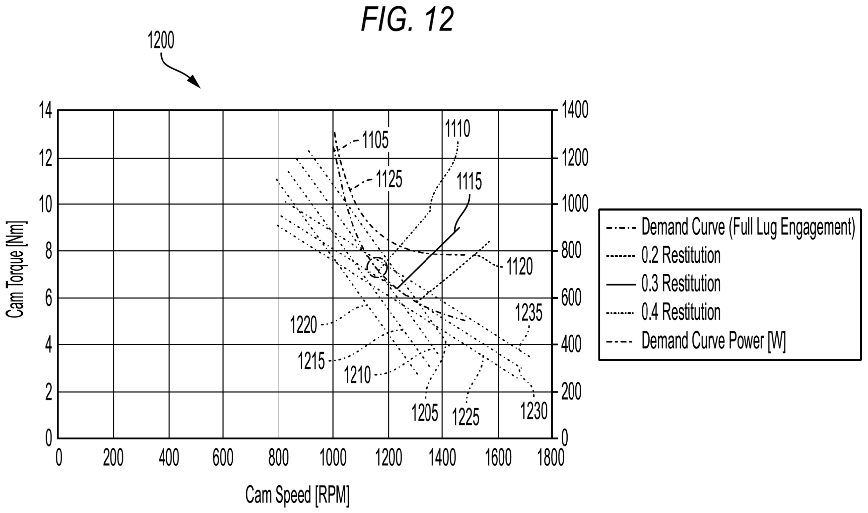

FIG. 12 shows several torque/speed slopes 1205, 1210, 1215, 1220, 1225, 1230, and 1235 overlayed on a graph 1200 of the torque/speed demand curve 1105 of FIG. 11. In the example shown, the torque/speed slopes 1205, 1210, 1215, 1220, 1225, 1230, and 1235 represent various testing scenarios where an impact tool (e.g., impact tool 100) is used to operate on a simulated workpiece or joint of a known hardness using a various motor speeds and various motor torques according to a predetermined torque/speed relationship (e.g., xRPM/2yNm + n, 2xRPM/yNm + n, etc.). As shown in FIG. 12, a plurality of simulated workpieces or joints may be used to simulate a variety of known hardnesses resulting in a variety of coefficients of restitutions experienced by the hammer 305. The simulated workpiece or joint used for the testing may be a specially designed stack of materials or a specially designed motor loading apparatus that can be used to simulate the known hardness resulting in the different coefficients of restitution 1110, 1115, 1120 shown in the graph 1200. For each hardness (i.e., for each coefficient of restitution 1110, 1115, 1120), the impact tool 100 may be operated according to numerous predetermined torque/speed relationships (represented by torque/speed slopes 1205, 1210, 1215, 1220, 1225, 1230, and 1235) until a satisfactory engagement of the hammer 305 and the anvil 310 is achieved. The torque/speed slope 1210 is crashing for a hardness and coefficient of restitution 1120. The torque/speed slope 1210 achieves satisfactory engagement of the hammer 305 and the anvil 310 for a hardness a coefficient of restitution 1110. The torque/speed slope 1215 is bottoming. The torque/speed slope 1220 is bottoming. The torque/speed slope 1225 is bottoming. The torque/speed slope 1230 achieves satisfactory engagement of the hammer 305 and the anvil 310 for a hardness and coefficient of restitution 1120. The torque/speed slope 1235 is crashing.

The motor torques and motor speeds at which satisfactory engagement is achieved for each predetermined hardness or restitution may then be stored (e.g., by the controller 245) as data points on a torque/speed graph. A curve fitting operation may then be used to connect the noted data points to produce the torque/speed demand curve 1105. As will be described in greater detail below, a curve matching operation may be implemented by the controller 245 of the impact tool 100 to control the torque and speed of the motor 205 to match the torque/speed demand curve 1105, thereby increasing the likelihood that satisfactory engagement of the hammer 305 and anvil 310 is consistently achieved across a range of joint or workpiece hardnesses and associated coefficients of restitution experienced by the hammer 305.

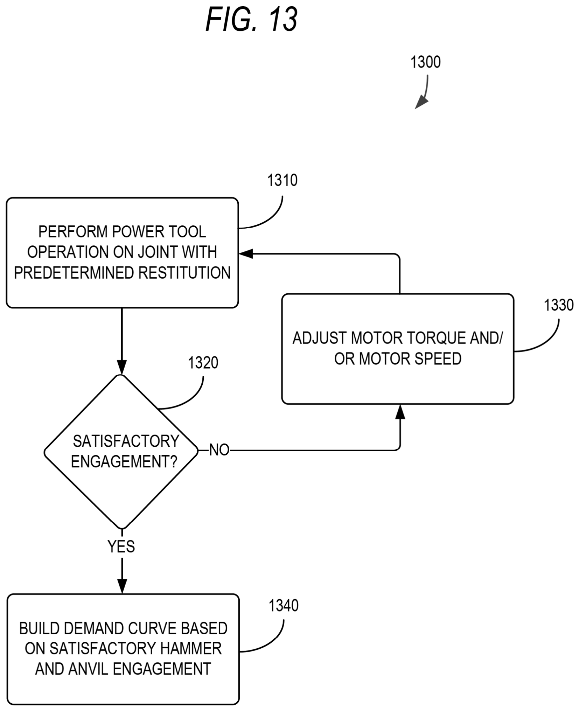

FIG. 13 is a flow diagram of a process 1300 for building a demand curve using data points indicating proper motor torques and proper motor speeds over a range of joint or workpiece hardnesses and associated coefficients of restitution experienced by the hammer 305. At block 1310, the impact tool 100 is used to perform an operation at a predetermined motor torque and a predetermined motor speed on a joint or workpiece. The joint or workpiece is selected to have a known hardness. This results in a consistent coefficient of restitution being experienced by the hammer 305 in response to impacting the anvil 310.

At block 1320, a sensor 225 (e.g., impact sensor 225C) of the impact tool 100 detects the impact of the hammer 305 on the anvil 310. The controller 245 or a user (manually) determines, based on the detection of the sensor 225, whether the impact of the hammer 305 on the anvil 310, is a satisfactory engagement. If the impact of the hammer 305 on the anvil 310 is not a satisfactory engagement, the process proceeds to block 1330. If the impact of the hammer 305 on the anvil 310 is a satisfactory engagement, the process proceeds to block 1340.

At block 1330, the controller 245 adjusts the motor speed and/or motor torque (e.g., according to a predetermined torque/speed relationship) and operates the motor 205 at the adjusted motor torque and/or motor speed. The process 1300 then returns to block 1310 and operates the motor 205 of the impact tool 100 at the adjusted motor speed and/or the adjusted motor torque.

At block 1340, the controller 245 or a user (manually) adds the motor speed and/or motor torque resulting in the satisfactory engagement of the hammer 305 and anvil 310 to a collection of data points (e.g., a collection of data points stored in memory 260). A curve fitting function may be used on this collection of data points (e.g., by a controller such as controller 245) to generate a torque/speed demand curve (e.g., torque/speed demand curve 1105).

In some embodiments, after block 1340, the joint or workpiece is swapped with a new joint or workpiece having a different known hardness resulting in a different consistent coefficient of restitution being experienced by the hammer 305 in response to impacting the anvil 310. The process 1300 may then restart at block 1310 where the impact tool 100 is used to perform an operation at a predetermined motor torque and a predetermined motor speed on the new joint or workpiece.

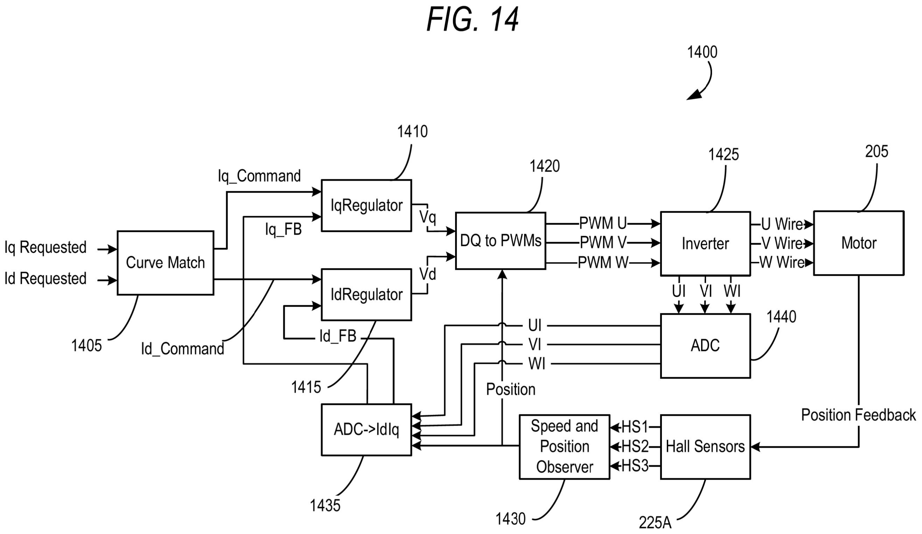

FIG. 14 shows a schematic for a field-oriented control ("FOC") circuit 1400 configured to be implemented in an impact tool (e.g., impact tool 100). The field oriented control circuit 1400 is configured to control the torque of the motor 205 to conform to the torque/speed demand curve 1105 (e.g., obtained using the process 1300) by controlling a quadrature current (I_{q}) and a direct current (I_{d}) driving the motor 205. In the embodiment shown, the field oriented control circuit 1400 is also configured to control the speed of the motor 205 to conform to the torque/speed demand curve 1105 by using pulse width modulated ("PWM") control.

The curve match integrated circuit 1405 is configured to receive a direct current request (Id Requested) and a quadrature current request (Iq Requested) from the controller 245 based on the torque/speed demand curve 1105. The Id Requested and Iq Requested correspond to, for example, an amount of activation of the trigger 130 or another user input and based on the torque/speed demand curve 1105. The curve match integrated circuit 1405 outputs a direct current command (Id_command) and a quadrature current command (Iq_command) in response to the direct current request and the quadrature current request. A quadrature current regulator 1410 and a direct current regulator 1415 generate and transmit to a PWM generator 1420 a direct voltage signal (Vd) and a quadrature voltage signal (Vq) corresponding to quadrature current command and the direct current command. The PWM generator 1420 generates and transmits phase control PWM signals (PWM U, PWM V, PWM W) to an inverter 1425 (e.g., switching network 220), which controls the rotation of the motor 205 to conform to the torque/demand curve 1105 based on the direct current request and the quadrature current request.

Hall effect sensors 225A sensors positioned adjacent to the motor 205 produce signals (HS1, HS2, HS3) based on the position of the rotor of the motor 205 as it rotates. The Hall effect sensors 225A communicate these signals to a speed and position observer circuit 1430, and the speed and position observer circuit 1430 generates a motor position signal (position) based on the Hall effect sensor signals, and transmits the motor position signal to the PWM generator 1420 and to a motor control feedback circuit 1435. The motor control feedback circuit 1435 also receives digital signals (UI, VI, WI) corresponding to the phase control PWM signals from an analog to digital converter 1440 connected to the inverter 1425. The motor feedback circuit 1435 generates and transmits a quadrature current feedback signal (Iq_FB) to the quadrature current regulator 1410, and also generates and transmits a direct current feedback signal (Id_FB) to the direct current regulator 1415. These current feedback signals are used in generating the quadrature voltage and direct voltage signals used in producing the PWM motor control signals described above.

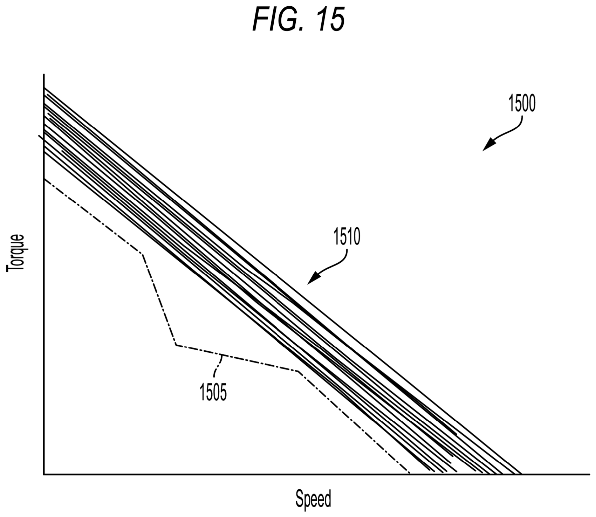

FIG. 15 shows a graph 1500 of a torque/speed curve 1505 defined for an impact tool (e.g., impact tool 100) using the field oriented control circuit 1400. In the embodiment shown, the controller 245 controls the torque and speed of the motor 205 in order to achieve an output for the impact tool 100 that conforms to the torque/speed curve 1505. The torque/speed curve may be the torque/speed demand curve 1105, or may be some other torque/speed curve (e.g., a user-define torque/speed curve). In the embodiment shown, the torque/speed curve 1505 corresponds to less than a maximum output 1510 of the motor 205.

For a given user input (e.g., trigger pull), the motor 205 may be capable of achieving a particular torque-speed output. In some embodiments, the controller 245 is configured to intentionally control the operation of the motor to achieve a lesser torque-speed output than the particular torque-speed output that could otherwise have been achieved by the motor 205. For example, the diagonal lines in FIG. 15 illustrate various torque-speed outputs that are possible to achieve for a particular tool (e.g., impact tool 100). Torque/speed curve 1505 represents the controller 245 controlling the operation of the motor 205 to achieve the lesser torque-speed output than what the motor 205 is capable of achieving. The lesser torque-speed output can be achieved using a lookup table that correlates a particular input (e.g., speed input) to the desired drive values for the motor 205. In some embodiments, the controller controls the operation of the motor using field-oriented control ("FOC") to control direct and quadrature current values, as described above, but may use other control schemes (e.g., block commutation).

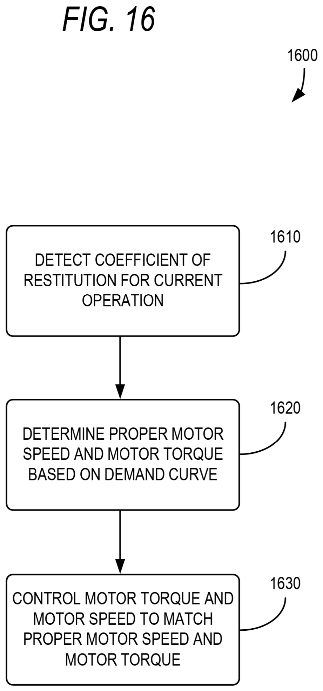

FIG. 16 is a flow diagram of a process 1600 of operating the impact tool 100 at the torque/speed demand curve 1505 based on a joint or workpiece hardness and associated coefficient of restitution experienced by the hammer 305. At block 1610, the sensors 225 or controller 245 of the impact tool 100 detect or otherwise determine a coefficient of restitution experienced by the hammer 305 in response to impacting the anvil 310 while performing an operation on the joint or workpiece.

At block 1620, the controller 245 correlates the detected coefficient of restitution experienced by the hammer 305 to the torque/speed curve 1505 to determine a proper motor speed and proper motor torque. The proper motor speed and proper motor torque being correlated to a satisfactory engagement of the hammer 305 and anvil 310 via the torque/speed curve 1505.

At block 1630, the controller 245 controls the speed and torque of the motor 205 to match the proper motor speed and the proper motor torque determined in block 1620.

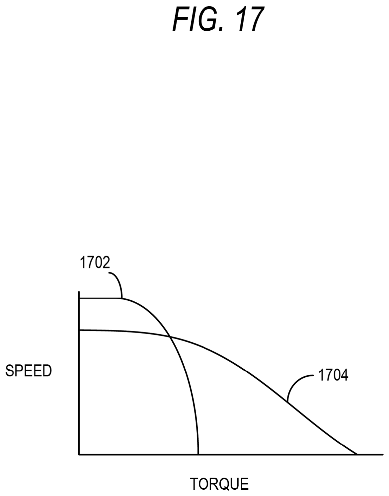

FIG. 17 illustrates a graph of a torque/speed curve 1702 of the power tool 100 operating in a first operational mode overlaid on a torque/speed curve 1704 of the power tool 100 operating in a second operational mode. The first operational mode torque/speed curve 1704 causes the power tool 100 to provide significantly higher torques at lower speeds, whereas the second operational mode torque/speed curve 1702 provides comparatively lower torques at higher speeds and higher torques at lower speeds, which is well suited for a specific application of the power tool 100 (e.g., repeated drill impacts during a hammer drilling operation). In the embodiment shown, the power tool 100 includes a mode selector including a button, dial, collar, or other user interface (e.g., mode selector 120, forward/reverse selector 140) that causes the controller 245 to switch between the first operational mode and the second operational mode. When switching operating modes of the power tool 100, the controller 245 adjusts the current torque/speed curve (e.g., torque/speed curve 1704) of the power tool 100 to match another torque/speed curve (e.g., torque/speed curve 1702). For example, if the power tool 100 is a hammer drill, the mode selector of the power tool 100 may include a selectable "hammer mode" setting (e.g., selectable via the mode selector) that adjusts the current torque/speed curve to fit a different torque/speed curve optimized for a hammer drilling application (e.g., hammer drilling through concrete). Although the mode changing feature illustrated in FIG. 17 has been generally described with respect to a "hammer mode," it is contemplated that other modes could be associated with various operations (e.g., chisel operations, drill operations, drive operations, precision operations, etc.) or various workpiece materials (e.g., foams, plastics, woods, concretes, stones, etc.) having their own predetermined torque/speed curves. Additionally, the torque/speed curves 1702, 1704 in FIG. 17 are illustrative, and are only intended to show that, in various embodiments, the mode selector of the power tool 100 may be manipulated, for example by a user, to set/adjust the current torque/speed curve of the power tool 100 to match any of a plurality of torque/speed curves.

In some embodiments, the controller 245 is configured to detect a type of the battery pack 210 that is connected to the battery pack interface 235 and to set the torque/speed curve to a predetermined torque speed curve associated with the detected type (e.g., based on voltage, current, impedance, etc.) of the battery pack 210. In such embodiments, the controller 245 sets/adjusts the torque/speed curve for the type of the battery pack 210 to, for example, prevent the battery pack 210 from overloading during use (e.g., due to an overcurrent condition, an overvoltage condition, an overtemperature condition, etc.).

In some embodiments, the controller 245 is configured to infer the type of the battery pack 210 using a battery pack impedance check ("PIC") algorithm. In some embodiments, the type of the battery pack 210 is identified via pack-tool-communications (PTC) circuitry positioned in the battery pack 210 and configured to communicate with the controller 245. In some embodiments, the type of the battery pack 210 is identified via firmware of the battery pack 210 configured to communicate the type of the battery pack 210 to the controller 245.

Accordingly, when a 12V 2Ah battery pack is connected to the battery pack interface 235, the controller 245 may determine the type of the connected battery pack is a 12V 2Ah battery pack. In such embodiments, the controller 245 adjusts the torque/speed curve (e.g., torque speed curve 1702) to optimize the output of the motor 205 (e.g., speed output, torque output, etc.) and to prevent the connected battery pack 210 from drawing an amount of current that would likely result in the battery pack 210 overheating. The controller 245 may also be configured to select (e.g., from memory 260) a different torque/speed curve for, for example, a 5.0Ah battery pack, a 12.0Ah battery pack, etc.

In some embodiments, the controller 245 is configured to select a torque/speed curve from a plurality of predetermined torque speed curves stored in memory 260 and to adjust the current torque/speed curve of the power tool 100 based on the selected torque/speed curve. In other embodiments, the controller 245 is configured to generate a new torque/speed curve based on the operating characteristics of the power tool 100 and the sensed characteristics or type of the battery pack 210.

In some embodiments, the controller 245 is configured to detect a low impedance battery pack is connected to the battery pack interface 235 and to select/adjust/generate a torque/speed curve for the detected low impedance. The torque/speed curve for such a battery pack 210 may be adjusted/selected/generated to prevent the power tool 100 from being damaged during use due to the low impedance of the battery pack 210. Here, the impedance of the battery pack 210 may be measured using the methods described above (e.g., PTC, PIC, etc.). For example, the controller 245 may detect (e.g., via a PIC algorithm) that a low impedance 90.0Ah battery pack is connected to the battery pack interface 235. The controller 245 may, in response, determine a torque/speed curve that is optimized to prevent the motor 205 or some other component of the power tool 100 (e.g., a gearbox of the power tool 100) from overheating and eventually failing during use (e.g., due to excessive current). In some embodiments, both battery pack type determination and battery pack impedance determination can be used together.

### REPRESENTATIVE FEATURES

Representative features are set out in the following clauses, which stand alone or may be combined, in any combination, with one or more features disclosed in the text and/or drawings of the specification.

Clause 1. An impact tool comprising: a trigger; a brushless direct current motor including a motor shaft; an impact mechanism including: a hammer coupled to the motor shaft, and an anvil configured to receive impacts from the hammer; an output drive device including a shaft coupled to the anvil and configured to rotate to perform a task; and a controller connected to the brushless direct current motor, the controller configured to: receive an output signal from the trigger, and control the brushless direct current motor to operate based on the output signal from the trigger and a predetermined torque/speed demand curve corresponding to satisfactory engagement of the hammer and the anvil.

Clause 2. The impact tool of clause 1, further comprising: a mode selector, wherein the controller is further configured to adjust the predetermined torque/speed demand curve in response to a changing of a mode of the impact tool via the mode selector.

Clause 3. The impact tool of any preceding clause, wherein the controller is further configured to determine a type of a battery pack connected to the impact tool, and to adjust the predetermined torque/speed demand curve based on the type of the battery pack.

Clause 4. The impact tool of any preceding clause, wherein the controller is further configured to determine an impedance of a battery pack connected to the impact tool, and to adjust the predetermined torque/speed demand curve based on the impedance of the battery pack.

Clause 5. The impact tool of any preceding clause, wherein the controller is configured to control the brushless direct current motor using field-oriented control ("FOC").

Clause 6. The impact tool of any preceding clause, further comprising: a hammer translation sensor configured to detect a movement of the hammer; and an anvil rotation sensor configured to detect a movement of the anvil.

Clause 7. The impact tool of any preceding clause, wherein the controller is further configured to determine a coefficient of restitution experienced by the hammer.

Clause 8. An impact tool comprising: a housing; a trigger; a motor within the housing, the motor including a motor shaft; an impact mechanism including: a hammer coupled to the motor shaft, and an anvil configured to receive impacts from the hammer, the anvil coupled to an output drive device, the output drive device configured to rotate; and an electronic controller including a memory and an electronic processor, the electronic controller configured to: detect a pull of the trigger, control the motor at a first motor power in response to the pull of the trigger, determine a motor torque for satisfactory engagement of the hammer and anvil, and control the motor to operate at the motor torque for satisfactory engagement of the hammer and the anvil.

Clause 9. The impact tool of clause 8, further comprising: a mode selector, wherein the electronic controller is further configured to adjust the motor torque in response to a changing of a mode of the impact tool via the mode selector.

Clause 10. The impact tool of any of clauses 8 to 9, wherein the electronic controller is further configured to determine a type of a battery pack connected to the impact tool, and to adjust the motor torque based on the type of the battery pack.

Clause 11. The impact tool of any of clauses 8 to 10, wherein the electronic controller is further configured to determine an impedance of a battery pack connected to the impact tool, and to adjust the motor torque based on the impedance of the battery pack.

Clause 12. The impact tool of any of clauses 8 to 11, wherein the electronic controller is configured to control the motor using field-oriented control ("FOC").

Clause 13. The impact tool of any of clauses 8 to 12, further comprising: a hammer translation sensor configured to detect a movement of the hammer; and an anvil rotation sensor configured to detect a movement of the anvil.

Clause 14. A method of controlling an impact tool, the impact tool including a trigger, a brushless direct current motor including a motor shaft, an impact mechanism including a hammer coupled to the motor shaft and an anvil configured to receive impacts from the hammer, an output drive device including a shaft coupled to the anvil and configured to rotate to perform a task, the method comprising: receiving an output signal from the trigger; and controlling the brushless direct current motor to operate based on the output signal from the trigger and a predetermined torque/speed demand curve corresponding to satisfactory engagement of the hammer and anvil.

Clause 15. The method of clause 14, further comprising: adjusting the predetermined torque/speed demand curve in response to a changing of a mode of the impact tool via a mode selector.

Clause 16. The method of any of clauses 14 to 15, further comprising: determining a type of a battery pack connected to the impact tool; and adjusting the predetermined torque/speed demand curve based on the type of the battery pack.

Clause 17. The method of any of clauses 14 to 16, further comprising: determining an impedance of a battery pack connected to the impact tool; and adjusting the predetermined torque/speed demand curve based on the impedance of the battery pack.

Clause 18. The method of any of clauses 14 to 17, wherein controlling the brushless direct current motor includes controlling the brushless direct current motor using field-oriented control ("FOC").

Clause 19. The method of any of clauses 14 to 18, further comprising: detecting a movement of the hammer using a hammer translation sensor; and detecting a movement of the anvil using an anvil rotation sensor.

Clause 20. The method of any of clauses 14 to 19, further comprising: determining a coefficient of restitution experienced by the hammer.

Clause 21. A method of controlling an impact tool, the impact tool including a trigger, a motor including a motor shaft, an impact mechanism including a hammer coupled to the motor shaft and an anvil configured to receive impacts from the hammer, an output drive device configured to rotate, the method comprising: detecting a pull of the trigger; controlling the motor at a first motor power in response to the pull of the trigger; determining a motor torque for satisfactory engagement of the hammer and anvil; and controlling the motor to operate at the motor torque for satisfactory engagement of the hammer and anvil.

Clause 22. The method of clause 21, further comprising: adjusting the motor torque in response to a changing of a mode of the impact tool via a mode selector.

Clause 23. The method of any of clauses 21 to 22, further comprising: determining a type of a battery pack connected to the impact tool; and adjusting the motor torque based on the type of the battery pack.

Clause 24. The method of any of clauses 21 to 23, further comprising: determining an impedance of a battery pack connected to the impact tool; and adjusting the motor torque based on the impedance of the battery pack.

Clause 25. The method of any of clauses 21 to 24, wherein controlling the motor includes controlling the motor using field-oriented control ("FOC").

Clause 26. The method of any of clauses 21 to 25, further comprising: detecting a movement of the hammer using a hammer translation sensor; and detecting a movement of the anvil using an anvil rotation sensor.

Clause 27. The method of any of clauses 21 to 26, further comprising: determining a coefficient of restitution experienced by the hammer.

Clause 28. A method of generating a torque/speed demand curve for a power tool comprising: controlling, using an electronic processor, a motor to operate at a predetermined torque; causing, using an impact mechanism connected to the motor, a hammer of the impact mechanism to impact an anvil of the impact mechanism; determining, via the electronic processor, a satisfactory engagement of the hammer and anvil; and generating, via the electronic processor, a torque/speed demand curve correlating the predetermined torque to the satisfactory engagement, wherein the motor is a brushless direct current motor, wherein the hammer is coupled to a motor shaft of the motor, and wherein the anvil is connected to a shaft of an output drive device, the output drive device configured to rotate to perform a task.

Clause 29. The method of clause 28, further comprising: determining satisfactory engagement based on a translation of the hammer while performing an impact.

Clause 30. The method of clause 29, further comprising: detecting the translation of the hammer using a hammer translation sensor of the power tool.

Although this disclosure provides several embodiments, variations and modifications exist within the scope and spirit of one or more independent aspects of the disclosure as described herein. Various features and advantages are set forth in the following claims.

## Claims

1. An impact tool comprising:
a trigger;
a brushless direct current motor including a motor shaft;
an impact mechanism including:
a hammer coupled to the motor shaft, and
an anvil configured to receive impacts from the hammer;
an output drive device including a shaft coupled to the anvil and configured to rotate to perform a task; and
a controller connected to the brushless direct current motor, the controller configured to:
receive an output signal from the trigger, and
control the brushless direct current motor to operate based on the output signal from the trigger and a predetermined torque/speed demand curve corresponding to satisfactory engagement of the hammer and the anvil.

2. The impact tool of claim 1, further comprising:
a mode selector, wherein the controller is further configured to adjust the predetermined torque/speed demand curve in response to a changing of a mode of the impact tool via the mode selector.

3. The impact tool of claim 1, wherein the controller is further configured to determine a type of a battery pack connected to the impact tool, and to adjust the predetermined torque/speed demand curve based on the type of the battery pack.

4. The impact tool of claim 1, wherein the controller is further configured to determine an impedance of a battery pack connected to the impact tool, and to adjust the predetermined torque/speed demand curve based on the impedance of the battery pack.

5. The impact tool of claim 1, wherein the controller is configured to control the brushless direct current motor using field-oriented control ("FOC").

6. The impact tool of claim 1, further comprising:
a hammer translation sensor configured to detect a movement of the hammer; and
an anvil rotation sensor configured to detect a movement of the anvil.

7. The impact tool of claim 1, wherein the controller is further configured to determine a coefficient of restitution experienced by the hammer.

8. A method of controlling an impact tool, the impact tool including a trigger, a brushless direct current motor including a motor shaft, an impact mechanism including a hammer coupled to the motor shaft and an anvil configured to receive impacts from the hammer, an output drive device including a shaft coupled to the anvil and configured to rotate to perform a task, the method comprising:
receiving an output signal from the trigger; and
controlling the brushless direct current motor to operate based on the output signal from the trigger and a predetermined torque/speed demand curve corresponding to satisfactory engagement of the hammer and anvil.

9. The method of claim 8, further comprising:
adjusting the predetermined torque/speed demand curve in response to a changing of a mode of the impact tool via a mode selector.

10. The method of claim 8, further comprising:
determining a type of a battery pack connected to the impact tool; and
adjusting the predetermined torque/speed demand curve based on the type of the battery pack.

11. The method of claim 8, further comprising:
determining an impedance of a battery pack connected to the impact tool; and
adjusting the predetermined torque/speed demand curve based on the impedance of the battery pack.

12. The method of claim 8, wherein controlling the brushless direct current motor includes controlling the brushless direct current motor using field-oriented control ("FOC").

13. The method of claim 8, further comprising:
detecting a movement of the hammer using a hammer translation sensor; and
detecting a movement of the anvil using an anvil rotation sensor.

14. The method of claim 8, further comprising:
determining a coefficient of restitution experienced by the hammer.
